# FASCICULE DE BREVET EUROPEEN

(11) **EP 1 906 625 B1**
(45) Date de publication et mention de la délivrance du brevet: **28.03.2018**
(21) Numéro de dépôt: 07291147.2
(22) Date de dépôt: 26.09.2007
(51) Int. Cl.: H04L 29/06

(54) **Procédé et système de partage de fichiers sur un réseau, utilisant des capacités de stockage d'un boîtier de connexion au réseau**
Verfahren und System zur Aufteilung von Dateien in einem Netz unter Nutzung der Speicherkapazitäten eines Kastens zum Anschluss an ein Netz
Method and system for sharing files on a network, using the storage capabilities of a network connection box

(30) Priorité: 26.09.2006 FR 0608423
(43) Date de publication de la demande: 02.04.2008
(73) Titulaire: SOCIETE FRANCAISE DU RADIO TELEPHONE (SFR), 75015 Paris (FR)
(72) Inventeur: Maillard, Julien, 75010 Paris (FR)
(74) Mandataire: Debay, Yves

(56) Documents cités:
- WO-A-03/058910
- WO-A-2005/117386
- US-B1- 6 591 288

## Description

La présente invention se rapporte au domaine des télécommunications à travers un réseau, et concerne plus particulièrement un procédé et un système de partage de fichiers sur un réseau, utilisant des capacités de stockage d'un appareil de type boîtier de connexion au réseau. L'invention concerne également un appareil de connexion réseau permettant de partager avec une communauté, via un réseau de type Internet, des fichiers d'un équipement personnel (PC, téléphone portable, etc.).

Il est permis de partager de nombreuses façons du contenu sur Internet avec sa communauté de proches ou à destination de tout individu connecté via son équipement sur Internet. Le processus de partage est de manière générale toujours le même :
- inscription sur un site de partage ;
- téléchargement sur le site des fichiers à partager ;
- gestion des droits de partages (destinataires autorisés, ...) ;
- informations relatives à ses proches.

A titre d'exemple, les sites accessibles sur www.flickr.com ou www.box.net permettent de partager des photos, respectivement des fichiers. Cependant pour l'utilisateur, ces solutions présentent de nombreux inconvénients :
- gestion de multiples identifiants/mots de passe pour l'utilisateur ;
- service non immédiat puisque le téléchargement des fichiers à partager sur le site est plus ou moins long en fonction de la bande passante allouée sur le site par utilisateur ou sa fréquentation ;
- restriction forte d'utilisation (stockage en ligne souvent très limité en taille, bande passante limitée, mode gratuit très restreint et nombreuses fonctionnalités payantes) ;
- indisponibilité des fichiers partagés si le site est indisponible ;
- aucune solution de partage de contenus depuis son téléphone mobile.

La présente invention a donc pour objet de supprimer un ou plusieurs des inconvénients de l'art antérieur en définissant un procédé de partage de fichiers à travers un réseau de type Internet qui soit plus rapide et plus transparent pour l'utilisateur.

Un objectif supplémentaire de l'invention est de proposer un procédé de partage de fichiers qui soit toujours disponible quand on le souhaite et dans lequel l'utilisateur évite de passer par un service payant.

Le procédé selon l'invention utilise pour cela des capacités de stockage d'un appareil de connexion doté d'un modem, servant de manière connue en soi à connecter à un réseau de type Internet un terminal multimédia dans le domicile de l'utilisateur. Un transfert de contenu depuis le terminal multimédia vers les moyens de stockage de masse peut être commandé par l'utilisateur, une gestion des fichiers transférés est avantageusement implémentée dans l'appareil de connexion, et une mise en partage des fichiers stockés dans les moyens de stockage est prévue de façon à ce que l'appareil de connexion soit perçu comme un serveur rendant ces fichiers accessibles pour des terminaux distants connectés à Internet.

Il faut rappeler ici que des boîtiers de connexion d'un PC à un réseau tel qu'Internet sont connus dans l'art antérieur. Ces boîtiers permettent de recevoir des appels téléphoniques, et assurant en outre une fonction de réception de flux TV. Ce type de boîtier modem est appelé couramment « box » et se retrouve dans de nombreux domiciles de particuliers.

On connaît également des boîtiers à modem ADSL (Asymmetrical Digital Subscriber Line) dotés de disques durs, par exemple d'une capacité de 40 à 80 GO (Giga octets) ou supérieure, pour permettre d'enregistrer des programmes TV ou de la vidéo. Certains fournisseurs d'accès Internet (FAI) proposent ainsi une version de boîtier décodeur TV HD (haute définition) équipée d'un disque dur. Les abonnés peuvent, grâce à la capacité importante du disque dur, enregistrer très simplement les émissions diffusées sur le bouquet ADSL, le boîtier comportant par ailleurs les fonctions désormais classiques d'accès vers Internet, d'abonnement téléphonique avec la téléphonie illimitée, de réception TV sur ADSL. Avec ces boîtiers, des contenus audiovisuels reçus via le flux correspondant à la diffusion de programme de télévision peuvent donc être enregistrés : le téléspectateur peut même visionner un programme télévisé avec un léger différé (time-shifting) tout en poursuivant l'enregistrement.

Ce type de boîtier de connexion offre une bande passante importante qui permet de réaliser de nombreux échanges à travers le réseau Internet. Cependant, lorsqu'il s'agit de partager du contenu sur Internet avec une communauté, il est nécessaire de s'inscrire auprès d'un site de partage ou de créer soi-même un tel site.

Il existe également des systèmes d'échange de fichier de type pair à pair (Peer-to-Peer) tel que décrit dans la demande WO 2005/117386, dans lequel chaque utilisateur est connecté à un réseau d'accès local respectif par l'intermédiaire d'un réseau de transport. Le système est caractérisés par la fourniture d'espaces de stockage de réseau local associés à chaque utilisateur agencé pour archiver des contenus numériques et en effectuant le transfert de contenu via le réseau de transport à partir d'une zone de stockage associé à un utilisateur contenant des contenus demandés dans une zone de stockage de réseau distante associée à un utilisateur demandeur sur un réseau d'accès différent, en fonction de la connectivité disponible sur le réseau de transport.

Un objectif de l'invention est donc de proposer un procédé de partage de fichiers à travers un réseau de type Internet qui soit facile à utiliser et aussi bien adapté pour un utilisateur d'un PC que pour un utilisateur de téléphone portable.

Pour atteindre un ou plusieurs des buts de la présente invention, il est prévu un procédé selon l'une des revendications 1 à 19.

L'invention permet ainsi à un utilisateur d'Internet de partager avec des proches ou la communauté Internet des photos, des textes ou tout autre contenu dans un format numérique, en utilisant pour cela les capacités étendues de son appareil à modem (par exemple de type « box » ADSL) de son domicile.

L'invention a également pour objet de supprimer un ou plusieurs des inconvénients de l'art antérieur en proposant un appareil permettant de simplifier la mise en partage de fichiers stockés dans un terminal multimédia personnel.

A cet effet, l'invention concerne un appareil de connexion selon l'une des revendication 20 à 30.Ainsi, l'appareil selon l'invention d'accès au réseau peut parfaitement faire office d'espace de stockage des fichiers à partager et de serveur pour servir ces fichiers aux personnes désireuses de les consulter depuis un réseau étendu.

L'invention a également pour objet de proposer un système de partage de fichiers via un réseau qui permette à l'utilisateur de gérer facilement la mise en partage de fichiers volumineux stockés dans son équipement multimédia personnel.

A cet effet, l'invention concerne un système de partage de fichiers stockés selon la revendication 31.

Ainsi, un système conforme à l'invention permet de simplifier le partage de contenus sur le réseau Internet en utilisant les capacités de stockage des appareils de connexion à modem ADSL ou équivalent, l'utilisateur pouvant paramétrer la mise en partage depuis sont terminal multimédia personnel (PC, téléphone mobile, etc.).

L'invention, avec ses caractéristiques et avantages, ressortira plus clairement à la lecture de la description faite en référence aux dessins annexés donnés à titre d'exemples non limitatifs dans lesquels :
- la figure 1 représente de manière schématique un mode de réalisation d'un système selon l'invention, grâce auquel un terminal multimédia peut mettre en partage des fichiers stockés sur le disque dur du boîtier de connexion au réseau ;
- la figure 2 illustre des étapes de mise en partage d'un contenu selon un mode de réalisation de l'invention ;
- la figure 3 montre un exemple de séquence d'accès depuis le réseau Internet à un contenu en utilisant l'adresse du modem d'un appareil de connexion selon l'invention ;
- la figure 4 représente un mode de réalisation d'un système selon l'invention, dans lequel le contenu mis en partage est issu d'un terminal de téléphonie mobile ;
- la figure 5 montre un exemple d'utilisation d'un équipement d'un opérateur de radiotéléphonie pour envoyer des fichiers à mettre en partage vers un appareil de connexion conforme à l'invention.

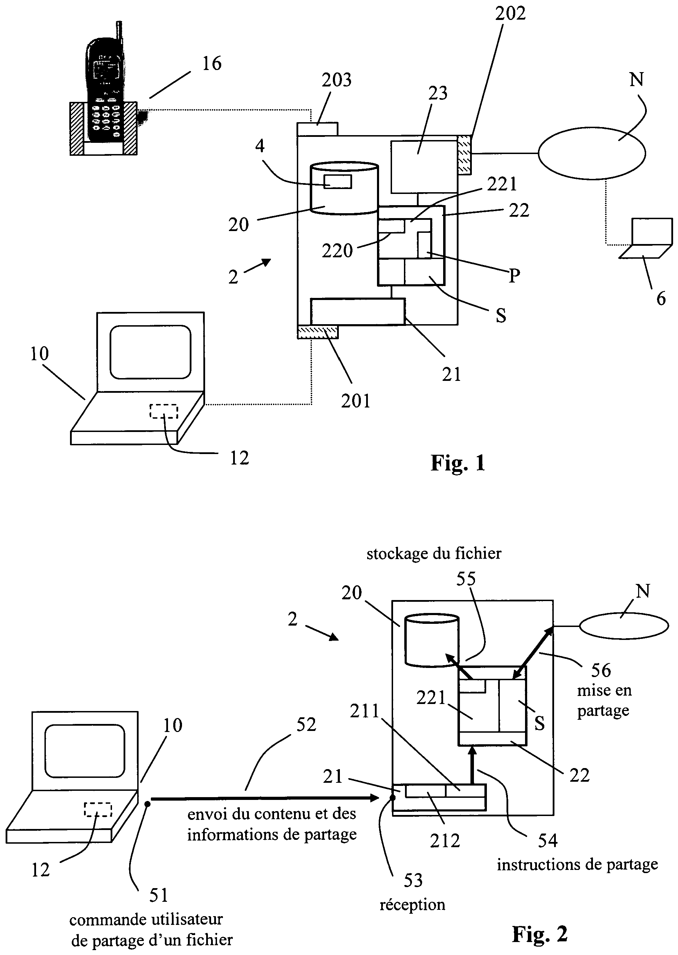

En référence à la figure 1, le système selon l'invention peut comporter un ordinateur ou plus généralement un terminal multimédia (10) de l'utilisateur et un appareil de connexion (2) associé pour permettre l'accès à un réseau (N) de type Internet via un modem (23). Un disque dur, une mémoire flash ou des moyens de stockage de masse (20) à mémoire non volatile équivalents sont prévus dans l'appareil de connexion (2). Un gestionnaire (221) de base de données est par exemple associé au disque dur (20) pour notamment répertorier et sélectionner les fichiers (4) stockés. On comprend que l'appareil de connexion (2) ne constitue pas un terminal puisqu'il ne se situe pas, contrairement à un ordinateur ou téléphone personnel, à une extrémité d'une chaîne de communication avec l'utilisateur et ne dispose pas d'interface avec l'utilisateur (pas d'écran, pas de souris, etc.).

Dans ce qui suit, bien que la présente invention décrit plus spécifiquement des modes de réalisation avec un boîtier de connexion de type « box à modem ADSL » pour connecter le terminal (10, T) de l'utilisateur au réseau (N), l'expression appareil de connexion (2) devra être comprise comme désignant tout type d'équipement doté de fonctions d'accès à un réseau étendu, quel que soit le mode de transmission des informations (transmission via un réseau filaire, radio, par ondes courtes ou moyennes ou une combinaison de ces modes de transmission). L'appareil de connexion (2) selon l'invention comprend un modem (23) et est notamment destiné à être constamment en fonctionnement dans le domicile de l'utilisateur : le modem (23) permet dans un mode de réalisation préféré de séparer les flux correspondant à une liaison Internet de ceux contenant une communication téléphonique ou correspondant à la diffusion d'un programme de télévision.

Dans le mode de réalisation de la figure 1, l'appareil de connexion (2) comporte une première interface de communication (201) avec le terminal multimédia (10) et une seconde interface de communication (202) avec le réseau (N). Une troisième interface de communication (203) peut être prévue pour transférer des d'appels reçus par l'appareil (2) vers un équipement téléphonique (16), par exemple de type à liaison RNIS (réseau numérique à intégration de services) ou équivalent. Le modem (23) est par exemple interposé entre la première interface (201) et la seconde interface (202) pour permettre de connecter ledit terminal (10, T) au réseau (N).

Une connexion permanente de l'appareil (2) de connexion au réseau (N) peut être avantageusement établie. Cette connexion permanente la réalisation d'un transfert des appels reçus par l'appareil (2) vers l'équipement téléphonique (16). Ce transfert s'effectue par l'interface de communication (203) pour recevoir les contenus à stocker dans les moyens de stockage de masse (20).

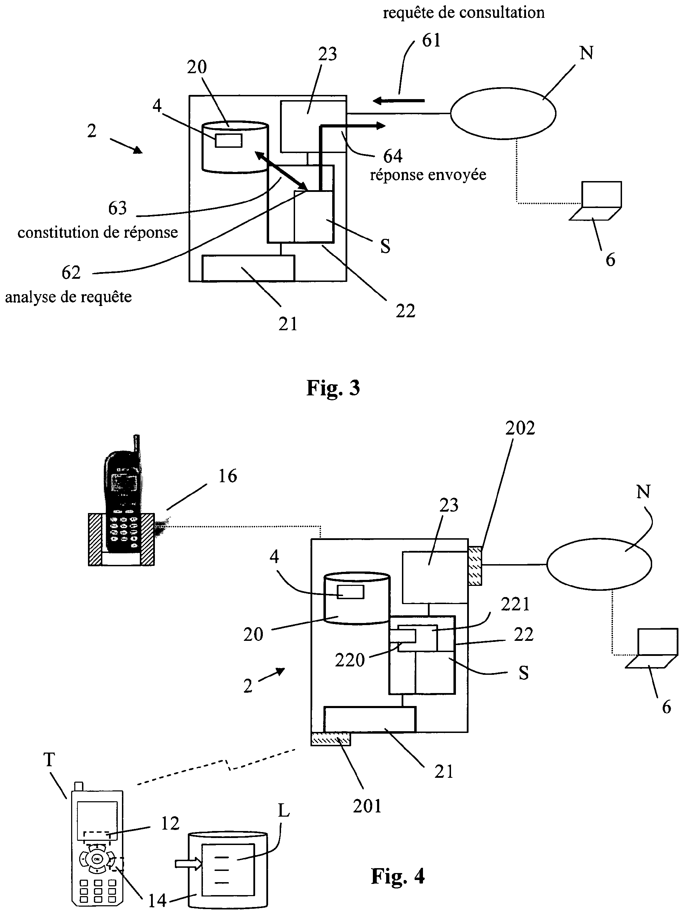

En référence aux figures 1 et 4, le système selon l'invention permet à l'utilisateur du terminal multimédia (10, T) de mettre en partage des fichiers stockés dans une mémoire (14) du terminal (10), en transférant ces fichiers dans les moyens de stockage de masse (20) de l'appareil de connexion (2). Pour cela, un simple logiciel appelé « plugin » peut être installé sur le système d'exploitation (sous le système Windows® par exemple) du terminal (10, T). Ce logiciel constitue un module (12) de traitement de fichiers qui permet d'indiquer que tel contenu doit être partagé en précisant si besoin :
- des droits d'accès (par exemple : diffusion restreinte, diffusion libre, sauvegarde possible lors de la consultation, sauvegarde en mode dégradé, sauvegarde impossible, durée de partage),
- dans quel album ou répertoire de partage doit être placé le fichier sur le site de partage (par exemple, « Album Photos » ou « Musique »).

Le procédé de mise en partage depuis le terminal (10, T) de l'utilisateur commence à la suite de la décision de ce dernier de partager un contenu de type audio, texte, vidéo, image, ou une combinaison de caractéristiques. Grâce au module (12) de traitement pouvant être intégré au système d'exploitation du terminal (10, T) et d'une interface associée, l'utilisateur indique par exemple en un clic qu'un fichier stocké dans le terminal (10, T) est désormais partagé.

Dans un mode de réalisation préféré de l'invention, le module (12) de traitement de fichiers du terminal (10, T) envoie silencieusement à l'appareil de connexion (2) le fichier et les informations liées. L'appareil de connexion (2) à modem (23) place alors le fichier (4) reçu et stocké en partage suivant les informations reçues. En référence aux figures 1, 2 et 4, le procédé de mise en partage peut débuter par un paramétrage de l'utilisateur depuis son terminal (10, T) d'une mise en partage de fichier, par sélection du fichier et saisie (51) d'une commande de partage du fichier sélectionné. Une étape d'administration des contenus en partage est réalisée par utilisation du module (12) de traitement de fichiers. Une liste (L) des fichiers correspondant aux contenus mis en partage peut être générée ou mise à jour lors de cette étape d'administration. La liste (L) est ensuite stockée dans une mémoire (14) du terminal multimédia (10, T). La commande de partage est transmise à l'appareil de connexion (2) après l'étape de sélection de fichiers à partager qui est effectuée via une interface du terminal (10, T) associée au module (12) de traitement.

Comme illustré à la figure 2, l'étape (52) d'envoi à l'appareil de connexion (2) du contenu à partager et des informations liées peut être réalisée par une connexion sans fil à la commande de partage est transmise via une connexion directe sans fil à courte ou moyenne distance, par exemple de type WiFi. Cet envoi peut être réalisé depuis un téléphone mobile (T) via cette couverture WiFi, comme illustré à la figure 4. Dans ce cas, le téléphone mobile (T) est équipé dudit « plugin » ou module (12) de traitement qui permet de mettre en partage un contenu présent dans le téléphone mobile et de l'envoyer silencieusement vers l'appareil de connexion (2) de l'utilisateur. Dans un mode de réalisation de l'invention, cette fonction est accessible lorsque le mobile de l'utilisateur :
- supporte une connexion à courte ou moyenne distance comme le WiFi ;
- est connecté à l'appareil (2) offrant lui-même une connexion WiFi ;
- est équipé d'un module (12) de traitement en version mobile (réalisable sur OS Symbian par exemple ou en Java sur certains terminaux compatibles).

Alternativement ou de manière complémentaire, une liaison filaire ou IR (infrarouge) peut permettre l'envoi de la commande de partage. On comprend que le terminal (10, T) peut correspondre à n'importe quel équipement personnel multimédia : PC, PDA (Personal Digital Assistant), équipement home cinéma, etc.

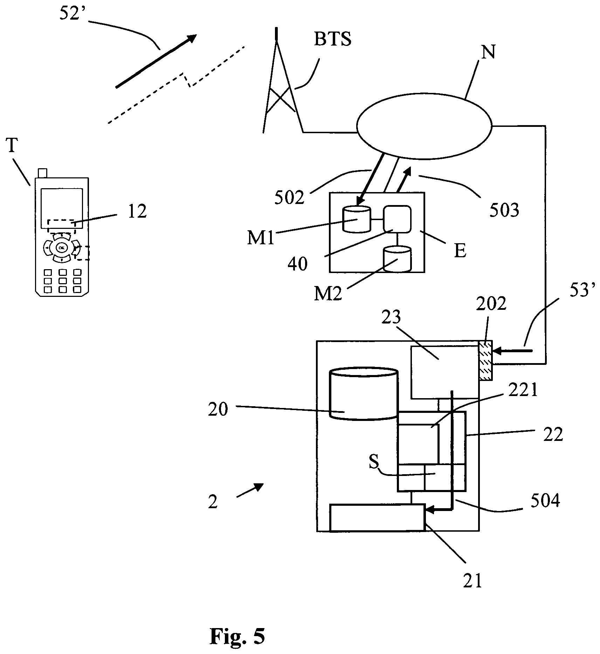

La commande de partage peut être acheminée via la première interface (201) et reçues lors d'une étape (53) de réception, par un premier module (21) de l'appareil de connexion (2). Ce premier module (21) permet de gérer les fichiers transmis depuis le terminal multimédia (10, T) personnel. Le premier module (21) peut offrir une fonction de serveur qui est en écoute sur la liaison terminal (10) - appareil (2) à modem. Alternativement ou de manière complémentaire, comme illustré à la figure 5, la commande de partage peut être acheminée à travers le réseau (N) et parvenir via la seconde interface (202) vers le premier module (21). Un second module (22) est prévu dans l'appareil de connexion (2) pour réaliser la mise en partage des fichiers, ce second module (22) incluant une partie serveur (S) pour servir les requêtes reçues depuis le réseau (N). La partie serveur (S) peut ainsi former un serveur Web pour traiter des requêtes issues de terminaux distants (6) connectés sur Internet.

En référence à la figure 2, une étape (54) d'interprétation d'instructions de la commande de partage peut être réalisée par le premier module (21). Ce dernier comprend par exemple des moyens (212) d'analyse de données de configuration relatives au contenu réceptionné lors de l'étape (53) de réception pour déterminer si le contenu reçu peut être librement accédé. Si c'est le cas, une commande de stockage du contenu (4) est transmise vers le second module (22) pour permettre de déclencher l'étape (55) de stockage dans les moyens de stockage de masse (20). L'étape d'interprétation peut consister en une analyse de fichier suivant les informations de partage reçues du module (12) de traitement du terminal (10, T) et d'éventuelles contraintes de sécurité ou juridiques liées au type de fichier et qui pourraient interdire sa mise en partage. Dans cet exemple, ces informations permettent donc au premier module (21) de prendre ou non la décision de mise en partage.

En référence aux figures 1, 2 et 4, le gestionnaire (221) de base de données est prévu dans le second module (22) et comprend des moyens (220) de sélection associés aux moyens de stockage de masse (20), pour permettre de gérer les contenus (4) stockés. Au moment de ou après l'étape (5) de stockage, une étape (56) de mise en partage avec ledit réseau (N) des contenus (4) stockés est paramétrée par des moyens (P) de paramétrage du gestionnaire (221) de base de données et un accès depuis le réseau (N) aux contenus (4) mis en partage est rendu possible par utilisation de la partie serveur (S) présente dans un second module (22).

On comprend ainsi que la prise en charge des contenus (4) à mettre en partage au niveau du second module (22) comporte :
i) le stockage du fichier (4) sur le disque dur ou moyen de stockage analogue (20) de l'appareil de connexion (2),
ii) la mise en partage du fichier (constitution de l'arborescence modifiée du site Web de l'utilisateur suite à l'ajout du fichier).

L'accès au disque par le gestionnaire de base de données du second module (22) se fait à l'aide des fonctions d'écriture sur le disque dur disponibles via le système d'exploitation présent dans l'appareil (2) à modem. Dans un mode de réalisation de l'invention, le module (12) du terminal (10, T) attend après chaque opération de mise en partage un acquittement de la part du premier module (21) de l'appareil de connexion (2). Les cas d'erreurs (disque plein, fichier non partageable, etc.) sont remontés par ce premier module (21) au plugin formant le module (12) de traitement de fichiers du terminal (10, T). Le module (12) du terminal (10, T) réagit à ce type d'erreurs en affichant une notification relative à l'erreur via un écran à l'utilisateur de manière non intrusive (alerte dans la zone de notification de la barre des tâches sous le système Windows® par exemple).

Pour la consultation depuis l'extérieur des contenus (4) partagés, c'est-à-dire des contenus paramétrés comme étant librement accessibles, l'utilisateur peut disposer d'une adresse URL fournie par son fournisseur d'accès Internet (exemple : http://www.sfr.fr/sitesperso/julienmaillard). Lors de l'appel à cette adresse URL depuis un navigateur Web d'un terminal distant (6), la requête finit par arriver dans le domaine du fournisseur d'accès Internet qui gère ensuite la correspondance avec l'appareil de connexion (2) à modem (23) de l'utilisateur. Ce site Web est en fait un site hébergé physiquement dans les moyens de stockage de masse (20) de l'appareil (2) de l'utilisateur.

Une interface d'administration de ce site Web peut aussi être proposée dans le système d'exploitation du terminal multimédia (10, T) personnel (comme une des icônes du Panneau de Configuration du système Windows® par exemple). Elle permet à l'utilisateur de définir la charte graphique de son site, de gérer les contenus de manière visuelle, les dossiers dans lesquels il va trier ses contenus (4) partagés. Cette interface peut être vue comme un site Web d'administration servie par l'appareil de connexion (2) sur la liaison entre le terminal (10, T) et l'appareil de connexion (2). L'interface d'administration permet par exemple de lister les fichiers partagés sur l'appareil de connexion (2) et d'en supprimer certains : l'utilisateur peut ainsi libérer de l'espace suite à un refus de partage d'un fichier du fait d'un disque plein sur l'appareil de connexion (2). Soit le module (12) du terminal s'appuie sur une liste (L) gérée par lui en local sur le terminal (10, T), soit il peut interroger le second module (22) via le premier module (21) pour établir la liste des fichiers (4) en cours de partage.

Tout fichier mis en partage par l'utilisateur peut être surveillé au niveau du terminal (10, T) par le module (12) de traitement. Autrement dit, si un fichier est mis à jour sur le terminal (10, T) alors que la copie ou contenu (4) correspondant est en partage sur les moyens de stockage de masse (20) de l'appareil de connexion (2), le module (12) de traitement le détecte et envoie silencieusement des informations de mise à jour pour modifier la version en partage hébergée sur le l'appareil de connexion (2). Dans ce mode de réalisation, le fichier (4) réellement partagé est donc en temps réel la version exacte stockée sur le terminal (10, T) de l'utilisateur sans que celui-ci n'ait aucune action à faire.

Le module (12) de traitement dispose en permanence d'une table listant par exemple les fichiers actuellement en partage sur l'appareil (2) à modem ainsi que la date de dernière modification du fichier. Comme illustré à la figure 2, le module de traitement (12) présent dans le terminal (10) transmet dans des commandes de mise à jour des instructions de modification ou suppression d'au moins un contenu (4) stocké dans les moyens de stockage de masse (20). Le premier module (21) comporte des moyens (211) de relais associés à la première interface de communication (201) pour relayer ces commandes issues du terminal (10, T) vers le second module (22). Le gestionnaire (221) de base de données permet alors de modifier ou supprimer le fichier ou contenu (4) mémorisé en réponse à la commande de modification ou suppression. Le gestionnaire (221) de base de données peut gérer la suppression du fichier (4) dans les moyens de stockage de masse (20), tandis que suppression du partage du fichier (4) peut être effectuée lors d'une modification par la partie serveur (S) de la constitution de l'arborescence du site Web de l'utilisateur, suite à la suppression du fichier (4).

La détection d'une modification réalisée au niveau du terminal (10, T) sur un fichier en partage peut être effectuée, soit de manière asynchrone en interceptant tous les accès au disque dur de l'ordinateur telle que l'application résidente d'un anti-virus peut le faire, soit de manière synchrone avec une opération de scrutation (polling) régulière sur l'état de chaque fichier présent dans la table ou liste (L) des fichiers partagés. Dès que la modification est détectée, la dernière version du fichier en envoyée au premier module (21) suivant le mode décrit précédemment et le contenu modifié est transmis au second module (22). Ce dernier détecte qu'une version du fichier est déjà en partage et remplace cette dernière par la version reçue.

La figure 3 illustre un exemple de consultation depuis l'extérieur des contenus (4) partagés. Le procédé peut prévoir une étape de gestion, par un serveur centralisé d'un fournisseur d'accès Internet, d'au moins une requête d'accès à un contenu (4) stocké dans les moyens de stockage de masse (20) de l'appareil de connexion (2). Lors de cette étape de gestion, une correspondance entre le contenu requis et l'appareil de connexion (2) à adresser est réalisée par ledit serveur centralisé pour générer une étape (61) d'envoi, vers le second module (22) de l'appareil de connexion (2), d'une requête de consultation dudit contenu. La correspondance entre le contenu requis et l'appareil de connexion (2) à adresser est réalisée par ledit serveur centralisé, par exemple en utilisant une adresse URL associée à la partie serveur (S) du second module (22) de l'appareil de connexion (2).

Dans le mode de réalisation de la figure 3, un internaute naviguant sur un terminal distant (6) peut accéder au site Web de l'utilisateur via le réseau de son fournisseur d'accès Internet. Le site Web de l'utilisateur peut disposer d'une URL fixe (par exemple http://www.sfr.fr/sitesperso/julienmaillard) et, au moment où une requête est présentée et parvient à l'entrée du domaine Internet géré par le fournisseur d'accès (www.sfr.fr dans l'exemple susmentionné), la correspondance est faite avec l'adresse de l'appareil (2) à modem vue par le réseau du fournisseur d'accès. La requête est alors acheminée vers l'appareil de connexion (2) à modem (23).

L'étape (61) de réception de cette requête issue du réseau (N) est réalisée par le second module (22). La séquence illustrée à la figure 3 prévoit que la partie serveur (S) du second module (22), en écoute sur la connexion entrante vers le modem (23), réceptionne la requête pour pouvoir la traiter. La partie serveur (S) commence le traitement de cette requête lors d'une étape (62) d'analyse de la requête. Afin de constituer la réponse, le second module (22) va s'appuyer sur une liste des contenus (4) en partage et les contraintes de constitution des pages Web fixées, soit par la partie serveur (S) du second module (22), soit par l'utilisateur. Dans ce dernier cas, on comprend que le module (12) de traitement peut être utilisé via une interface d'utilisateur pour gérer des fonctions plus avancées permettant à l'utilisateur d'améliorer son site personnel.

L'étape (63) de constitution de la réponse utilise le gestionnaire (221) de base de données du second module (22) pour sélectionner le contenu (4), en fonction des éléments d'information relatifs au contenu requis extraits de la requête de consultation. Enfin, la partie serveur (S) du second module (22) peut réaliser une étape (64) d'envoi d'une réponse incluant le contenu sélectionné vers le réseau (N) et adressée au terminal distant (6) à l'origine de la requête de consultation.

En référence à la figure 2, l'étape (56) de mise en partage sur le réseau (N) peut être réalisée pour des contenus accessibles via des fonctions multimédia d'un blogue de l'utilisateur du terminal multimédia (10). Dans ce cas, une maintenance du blogue est réalisée par l'intermédiaire du second module (22). Le module (12) de traitement de fichiers du terminal (10, T) peut disposer de fonctions avancées pour permettre à l'utilisateur d'améliorer son site personnel afin de le rendre plus riche qu'un simple site de partage de fichiers. A titre d'exemple, le site inclure ou constituer un blogue, dans lequel les fonctions multimédia suivantes du réseau Internet peuvent être utilisées : pjotoblog, baladodiffusion ("podcasting"), videoblog, mobiblog, webcam etc. Plus généralement, les fonctions supplémentaires peuvent être notamment :
- un ajout de fonctions de blogue,
- une amélioration de la charte graphique (choix de la mise en page, des couleurs, polices, ...),
- un ajout de blocs éditoriaux sur les fichiers partagés,
- une organisation des fichiers partagés en répertoire créés par l'utilisateur,
- un partage sélectif en fonction d'une liste (« white list ») d'utilisateurs autorisés.

L'hébergement reste physiquement fait sur le disque dur ou moyen de stockage de masse (20) équivalent de l'appareil (2) à modem (23). Les modifications de l'utilisateur apportées via l'interface incluant le module (12) de traitement de son terminal (10, T) sont envoyées par ledit module (12) vers l'appareil de connexion (2). Le premier module (21) de l'appareil de connexion (2) les relaie directement au second module (22), qui est en charge de la constitution du site Web de l'utilisateur.

Dans le mode de réalisation de la figure 5, il est permis de déclencher la mise en partage d'un fichier depuis un terminal mobile (T) tel qu'un téléphone portable qui ne dispose pas d'une connexion de type WiFi ou qui se situe en dehors de la couverture WiFi ou analogue (Bluetooth®) de l'appareil de connexion (2). Dans l'exemple de la figure 5, le plugin version mobile formant le module (12) du terminal (T) peut envoyer à l'appareil de connexion (2) un fichier à partager via le réseau data d'un opérateur de téléphonie. Le terminal (T) communique (52') avec la station de base (BTS) du réseau qui peut être du type GPRS (General Packet Radio Service), UMTS, HSDPA (High Speed Downlink Packet Access), etc. pour établir une première communication avec un équipement (E) du réseau de radiotéléphonie. Cet équipement (E) est prévu pour :
- recevoir (502) les fichiers à partager depuis différents terminaux mobiles (T) de clients de l'opérateur (SFR par exemple),
- faire la correspondance sur la base du MSISDN (Mobile Station ISDN Number) du client avec son appareil (2) à modem, cette correspondance pouvant s'appuyer sur les informations collectées par l'opérateur lors de la souscription de l'abonnement au service de connexion (abonnement ADSL par exemple),
- envoyer (503) vers l'appareil de connexion (2) le fichier à mettre en partage.

Dans l'exemple de la figure 5, on comprend donc que la commande de partage est reçue (53') par l'intermédiaire du modem (23). Le ou les contenu(s) désigné(s) dans la commande de partage peuvent transiter dans des moyens de stockage temporaire (M1) de équipement (E) du réseau de radiotéléphonie, avant d'être envoyé vers l'appareil de connexion (2). Des moyens de routage (40) de l'équipement (E) permettent d'extraire d'une table de correspondance (M2) l'adresse du modem (23) de l'appareil de connexion (2), à partir de donnés d'identification fournies par le téléphone mobile (T). L'envoi (503) du fichier à l'appareil de connexion (2) se fait via la connexion Internet et la requête est donc reçue par le second module (22). Après une étape (504) de transfert de ladite commande et du contenu associé du second module (22) vers le premier module (21), comme illustré à la figure 5, les instructions de la commande de partage vont être interprétées au niveau du premier module (21). Ce dernier peut appliquer alors au fichier le processus précédemment décrit en liaison avec la figure 2 à partir de l'étape (54) d'interprétation, comme si le fichier avait été transmis par le module (12) du terminal multimédia (10, T) de l'utilisateur.

Une étape de mise jour du premier module (21) et/ou du second module (22) peut être déclenchée après une étape de réception par le second module (22) d'une requête de mise à jour émise depuis un équipement du réseau (N). Cette requête contient des codes d'activation de mise à jour fournis par l'opérateur, pour permettre par exemple d'ajouter des fonctionnalités.

Un des avantages du procédé selon l'invention est de proposer un service très rapide avec une bande passante très satisfaisante (via Wifi ou Ethernet par exemple). De plus pour l'opérateur, il n'y a pas à déployer de la capacité de stockage (moyens de mémorisation de masse délocalisée) et le logiciel présent dans le boîtier peut être contrôlé (mises à jour, amélioration du service). On comprend que l'utilisateur dispose ainsi d'une solution de partage de ses contenus qui peut avantageusement être :
- gratuite,
- très simple d'utilisation (complètement intégrée à son système d'exploitation, donc transparent pour l'utilisateur),
- immédiate,
- utilisable en mobilité depuis son téléphone portable.

Cette solution assure en outre un service de partage disponible en permanence. Le partage de fichiers permis selon l'invention s'appuie en effet sur le principe simple suivant : le client abonné auprès d'un fournisseur d'accès à un réseau (N) tel qu'Internet dispose d'un appareil de connexion (2), par exemple à modem ADSL, qui dispose d'un disque dur interne et qui, une fois allumé, est disponible en permanence pour servir d'éventuelles requêtes en provenance d'Internet. Le client laisse en général l'appareil de connexion en permanence allumé puisqu'il permet en général de recevoir des appels téléphoniques.

La solution de partage de fichiers proposée selon l'invention est donc adaptée pour toucher le public le plus large puisqu'il s'agit simplement d'ajouter certaines applications et gestionnaires, ainsi qu'une capacité de stockage adéquate, dans un boîtier de connexion d'un équipement personnel au réseau Internet.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes et l'invention ne doit pas être limitée aux détails donnés ci-dessus.

## Revendications

1. Procédé de partage de fichiers (4) stockés dans un terminal multimédia (10, T) personnel, permettant un accès à au moins un contenu correspondant à un de ces fichiers (4) depuis un réseau (N) de type Internet, utilisant :
un terminal multimédia (10, T) étant connecté à un appareil de connexion (2) et à un équipement (E) par l'intermédiaire d'un réseau de radiotéléphonie ;
l'appareil de connexion (2) comprenant un moyen de stockage de masse à mémoire non volatile (20), un modem (23) pour permettre l'accès audit réseau et deux modules séparés :
• un premier module (21) configuré pour gérer les fichiers (4) transmis depuis le terminal multimédia (10, T) personnel, et
• un second module (22) configuré pour réaliser la mise en partage avec ledit réseau (N) des fichiers (4) et comprenant une partie serveur (S) configuré pour permettre depuis ledit réseau (N) l'accès à au moins un contenu correspondant à un fichiers (4) situé sur le moyen de stockage de masse à mémoire non volatile,
le procédé comportant :
- une étape de connexion du terminal multimédia (10, T) à un équipement (E) d'un réseau de radiotéléphonie ;
- une étape de réception (502) par l'équipement (E) du au moins un fichier (4) à partager, ledit au moins un fichier envoyé par le terminal multimédia (10, T) ;
- une étape de stockage dans des moyens de stockage temporaire (M1) de l'équipement (E) dudit au moins un fichier envoyé ;
- une étape de recherche de correspondance sur la base de données d'identification fournies par ledit terminal (10, T) de l'appareil de connexion (2) associé audit terminal (10, T) par l'équipement (E) ;
- une étape d'envoi (503) du au moins un fichier (4) à partager vers l'appareil de connexion (2) par l'équipement (E) ;
- une étape (53, 54) de réception et d'interprétation d'instructions, par le premier module (21) de l'appareil de connexion (2), d'une commande issue du terminal (10, T) de partage dudit au moins un fichier à partager, la commande de partage étant reçue par l'intermédiaire du modem (23) et ledit terminal étant un téléphone mobile (T) ;
- une étape (55) de stockage dans l'appareil de connexion (2) d'un contenu correspondant au(x) fichier(s) de la commande de partage, par utilisation de moyens de stockage de masse (20) à mémoire non volatile de l'appareil de connexion (2) sous contrôle du second module (22) ; et
- une étape (56) de mise en partage avec ledit réseau (N) des contenus stockés, par utilisation de la partie serveur (S) présente dans le second module (22) de l'appareil de connexion (2).

2. Procédé selon la revendication 1, dans lequel la commande de partage est transmise lors d'une étape (52) d'envoi par le terminal d'un contenu à stocker dans les moyens de stockage de masse (20) et d'informations de partage associées à ce contenu.

3. Procédé selon la revendication 1 ou 2, dans lequel la commande de partage est transmise à l'appareil de connexion (2) après une étape préalable de sélection, via une interface du terminal (10, T) associée à un module (12) de traitement de fichiers stockés dans le terminal (10, T), d'au moins un fichier que l'utilisateur souhaite mettre en partage.

4. Procédé selon la revendication 3, dans lequel une étape d'administration des contenus en partage est réalisée par utilisation dudit module (12) de traitement de fichiers, et dans laquelle une liste (L) des fichiers correspondant aux contenus mis en partage est générée et stockée dans une mémoire (14) du terminal multimédia (10, T).

5. Procédé selon une des revendications 1 à 4, dans lequel l'étape (54) d'interprétation comporte une lecture par des moyens (212) d'analyse du premier module (21) de données de configuration relatives au contenu réceptionné lors de l'étape (53) de réception pour déterminer si le contenu reçu peut être librement accédé, et si c'est le cas, une commande de stockage du contenu est transmise vers le second module (22) pour permettre de déclencher l'étape (55) de stockage.

6. Procédé selon une des revendications 1 à 5, dans lequel des commandes, issues du terminal (10, T) et incluant des instructions de modification ou suppression d'au moins un contenu stocké dans les moyens de stockage de masse (20), sont reçues par des moyens (211) de relais du premier module (21) et relayées vers le second module (22) pour permettre de déclencher une modification ou une suppression du contenu identifié dans les instructions extraites des commandes.

7. Procédé selon une des revendications 1 à 6, comprenant l'établissement d'une connexion permanente de l'appareil (2) de connexion au réseau (N), cette connexion permanente étant utilisée lors d'une étape de transfert d'appels reçus par l'appareil (2) vers un équipement téléphonique (16), le transfert étant réalisé via une interface de communication (203) de l'appareil distincte de l'interface de communication (201) associée au premier module (21) qui permet de recevoir les contenus à stocker dans les moyens de stockage de masse (20).

8. Procédé selon une des revendications 1 à 7, comprenant une étape de gestion par un serveur centralisé d'un fournisseur d'accès Internet d'au moins une requête d'accès à un contenu stocké dans les moyens de stockage de masse (20) de l'appareil de connexion (2), dans laquelle une correspondance entre le contenu requis et l'appareil de connexion (2) à adresser est réalisée par ledit serveur centralisé pour générer une étape (61) d'envoi, vers le second module (22) de l'appareil de connexion (2), d'une requête de consultation dudit contenu.

9. Procédé selon la revendication 8, dans lequel la correspondance entre le contenu requis et l'appareil de connexion (2) à adresser est réalisée par ledit serveur centralisé par utilisation d'une adresse URL associée à la partie serveur (S) du second module (22) de l'appareil de connexion (2).

10. Procédé selon une des revendications 1 à 9, comprenant :
- une étape (61) de réception, par le second module (22) de l'appareil de connexion (2), d'une requête de consultation d'un contenu issue du réseau (N) ;
- une étape (62) d'analyse de la requête par la partie serveur (S) du second module (22) ;
- une étape (63) de constitution d'une réponse, dans laquelle un gestionnaire (221) de base de données du second module (22) est utilisé pour sélectionner le contenu, en fonction d'éléments d'information, relatifs au contenu requis, extraits de la requête de consultation ; et
- une étape (64) d'envoi, par la partie serveur (S) du second module (22), d'une réponse incluant le contenu sélectionné vers le réseau (N) et adressée au terminal distant (6) à l'origine de la requête de consultation.

11. Procédé selon une des revendications 1 à 10, dans lequel la commande de partage est transmise via une connexion directe sans fil à courte ou moyenne distance entre un téléphone mobile (T) formant le terminal multimédia et l'appareil de connexion (2).

12. Procédé selon une des revendications 1 à 11, dans lequel ladite étape (56) de mise en partage sur le réseau (N) est réalisée pour des contenus accessibles via des fonctions multimédia d'un blogue de l'utilisateur du terminal multimédia (10), une maintenance du blogue étant réalisée par l'intermédiaire du second module (22).

13. Procédé selon la revendication 6, comprenant une étape de mise à jour, par un gestionnaire (221) de base de données du second module (22), d'au moins un des contenus mis en partage avec le réseau (N), l'étape de mise à jour étant déclenchée après une étape de détection, par des moyens de détection d'un module (12) de traitement des fichiers stockés dans le terminal (10, T), d'une modification effectuée par l'utilisateur sur au moins un des fichiers stockés dans le terminal (10, T) et dont le contenu est mis en partage, les commandes incluant les instructions de modification ou suppression étant transmises depuis ledit module (12) de traitement.

14. Procédé selon la revendication 6 ou 13, comprenant dans le terminal multimédia (10, T) une étape de détection asynchrone d'une modification ou suppression d'un fichier réalisée au niveau du terminal (10, T) pour permettre de déclencher une modification ou une suppression du contenu correspondant, mis en partage via les moyens de stockage de masse (20) de l'appareil de connexion (2).

15. Procédé selon la revendication 6 ou 13, comprenant dans le terminal multimédia (10, T) une étape de détection synchrone d'une modification ou suppression d'un fichier réalisée au niveau du terminal (10, T) pour permettre de déclencher une modification ou une suppression du contenu correspondant, mis en partage via les moyens de stockage de masse (20) de l'appareil de connexion (2).

16. Procédé selon la revendication 1, dans lequel l'étape (54) d'interprétation d'instructions, par le premier module (21), de la commande de partage s'effectue après une étape (504) de transfert de ladite commande et du contenu associé du second module (22) vers le premier module (21).

17. Procédé selon la revendication 1 ou 16, comprenant une étape d'établissement d'une correspondance, réalisée par des moyens de routage (40) de l'équipement (E) du réseau de radiotéléphonie, pour extraire d'une table de correspondance (M2) l'adresse du modem (23) de l'appareil de connexion (2), à partir de donnés d'identification fournies par le téléphone mobile (T).

18. Procédé selon une des revendications 1 à 17, comprenant une étape de mise à jour du premier module (21) et/ou du second module (22), déclenchée après une étape de réception par le second module (22) d'une requête de mise à jour émise depuis un équipement du réseau (N), la requête contenant des codes d'activation de mise à jour.

19. Procédé selon une des revendications 1 à 1918 comprenant une étape d'envoi d'un acquittement réalisée par le premier module (21) si l'étape (56) de mise en partage a été accomplie avec succès, cet acquittement étant attendu par un module (12) de traitement du terminal (10, T) ayant généré la commande de partage.

20. Appareil (2) de connexion à un réseau (N) de type Internet, comprenant
• une première interface de communication (201) avec un terminal multimédia (10, T) personnel configuré pour permettre d'établir une connexion directe sans fil à courte ou moyenne distance avec ledit terminal
• une seconde interface de communication (202) avec le réseau (N),
• des moyens de stockage de masse (20) à mémoire non volatile,
• un modem (23) interposé entre la première interface (201) et la seconde interface (202) pour permettre de connecter ledit terminal (10, T) au réseau (N),
l'appareil de connexion (2) comprenant deux modules séparés :
- un premier module (21) pour gérer des fichiers transmis depuis un terminal multimédia (10, T) personnel et reçus via la première interface (201), le premier module (21) étant également agencé pour gérer des fichiers transmis depuis un terminal multimédia (10, T) personnel et reçus via la seconde interface (202) ;
- un second module (22) en liaison avec les moyens de stockage de masse (20) pour déclencher une mémorisation d'un fichier (4), en réponse à une commande délivrée par le premier module (21), le second module (22) comprenant :
- i) une partie serveur (S) configurée pour permettre depuis ledit réseau (N) l'accès à au moins un contenu correspondant à un fichiers (4) situé sur les moyens de stockage de masse à mémoire non volatile (20), ; et
- ii) un gestionnaire (221) de base de données incluant des moyens (220) de sélection associés aux moyens de stockage de masse (20), permettant de répertorier et de sélectionner chacun des fichiers (4) mémorisés dans les moyens de stockage de masse (20), le gestionnaire (221) de base de données comprenant des moyens (P) de paramétrage pour paramétrer une mise en partage avec le réseau (N) des fichiers (4) répertoriés
l'appareil de connexion (2) étant adapté pour :
• recevoir et interpréter (53, 54) des instructions, par le premier module (21) de l'appareil de connexion (2), d'une commande issue d'un téléphone mobile (10, T) de partage dudit au moins un fichier à partager ; la commande de partage étant reçue par l'intermédiaire du modem (23) et provenant dudit téléphone mobile (T) connecté à un réseau de radiotéléphonie,
• recevoir au moins un fichier à partager par l'intermédiaire dudit modem (23) depuis un équipement (E) dudit réseau de radiotéléphonie,
• stocker (55) dans l'appareil de connexion (2) un contenu correspondant audit au moins un fichier de la commande de partage, par utilisation desdits moyens de stockage de masse (20) à mémoire non volatile de l'appareil de connexion (2) sous contrôle du second module (22) ; et
• mettre en partage (56) avec ledit réseau (N) des contenus stockés, par utilisation de la partie serveur (S) présente dans le second module (22) de l'appareil de connexion (2).

21. Appareil selon la revendication 20, dans lequel le premier module (21) comporte des moyens (212) d'analyse d'informations représentatives d'autorisation d'accès des fichiers reçus via la première interface (201) pour déterminer si au moins un des fichiers reçus (4) peut être librement accédé et, si c'est le cas, générer une commande de stockage du fichier (4) librement accessible à destination du second module (22).

22. Appareil selon la revendication 20 ou 21, dans lequel le premier module (21) comporte des moyens (211) de relais associés à la première et seconde interface de communication (201,202) pour relayer des commandes issues du terminal (10, T) de modification ou suppression d'au moins un fichier mémorisé vers le second module (22), le gestionnaire (221) de base de données dans le second module (22) inclue les moyens (220) de sélection pour permettre de modifier ou supprimer un fichier (4) mémorisé en réponse à une commande de modification ou suppression.

23. Appareil selon une des revendications 20 à 22, dans lequel le second module (22) comprend un gestionnaire (221) de base de données incluant lesdits moyens (220) de sélection pour permettre un accès de partage des fichiers stockés dans les moyens de stockage de masse (20) auprès de terminaux distants (6) connectés au réseau (N), le gestionnaire (221) de base de données étant configuré pour accumuler des éléments d'information relatifs à chaque fichier (4) et mettre à jour ces éléments d'information et/ou les fichiers associés en fonction de commandes de mise à jour issues du terminal (10, T).

24. Appareil selon la revendication 20, dans lequel le second module (22) comprend des moyens de transfert d'une commande de partage reçue via la seconde interface (202) vers le premier module (21).

25. Appareil selon une des revendications 20 à 24, comprenant une troisième interface de communication (203) permettant de transférer des d'appels reçus par l'appareil (2) vers un équipement téléphonique (16).

26. Appareil selon une des revendications 20 à 25, dans lequel le second module (22) est relié au modem (23) pour recevoir une requête de consultation d'un contenu issue du réseau (N) et analyse cette requête de consultation par utilisation de la partie serveur (S), le gestionnaire (221) de base de données du second module (22) recevant des éléments d'information relatifs au contenu requis, extraits de la requête de consultation, pour sélectionner le contenu requis.

27. Appareil selon la revendication 26, dans lequel la partie serveur (S) du second module (22) est agencé pour envoyer vers le réseau (N) une réponse à la requête de consultation de contenu, en incluant le contenu sélectionné et des données d'adressage du terminal distant (6) à l'origine de la requête de consultation.

28. Appareil selon une des revendications 20 à 27, dans lequel la première interface de communication (201) comprend un élément de connexion directe sans fil à courte ou moyenne distance pour communiquer avec un téléphone mobile (T) doté d'un élément de connexion analogue.

29. Appareil selon une des revendications 20 à 28, dans lequel le second module (22) comprend des moyens de maintenance d'un blogue de l'utilisateur du terminal multimédia (10).

30. Appareil selon une des revendications 20 à 29, comprenant un décodeur d'un flux TV et un enregistreur vidéo numérique permettant de stocker des programmes TV reçus via le décodeur dans les moyens de stockage de masse (20).

31. Système de partage de fichiers stockés dans un terminal multimédia (10, T) personnel, permettant un accès à au moins un contenu correspondant à un de ces fichiers (4) depuis un réseau (N) de type Internet, **caractérisé en ce qu'**il comprend :
- un serveur centralisé connecté à un réseau (N) de type Internet ;
- un appareil de connexion (2) selon l'une des revendications 20 à 30 ;
- un terminal multimédia (10, T) personnel doté d'un module (12) de traitement de fichiers stockés dans le terminal (10, T), le module (12) de traitement permettant de gérer une mise en partage de fichiers stockés dans le terminal (10, T) et des moyens associés audit module de traitement (12) du terminal (10, T) pour envoyer des commandes de partage de fichier(s), via une interface de communication du terminal (10, T), vers l'appareil de connexion (2) ;
- un équipement (E) d'un réseau de radiotéléphonie permettant le transit d'au moins un contenu avant d'être envoyé vers l'appareil de connexion (2) et comprenant :
∘ un moyen de connexion au terminal multimédia (10, T) ;
∘ un moyen de réception d'au moins un fichier à partager, ledit au moins un fichier étant envoyé par ledit terminal multimédia (10, T) ;
∘ des moyens de stockage temporaire (M1) ;
∘ des moyens de routage (40) pour extraire une table de correspondance (M2) l'adresse du modem (23) de l'appareil de connexion (2) à partir de données d'identification fournies par le terminal (10, T) ;
∘ un moyen d'envoi à l'appareil de connexion (2) des fichiers à partager.

## Patentansprüche

1. Verfahren zum gemeinsamen Nutzen von Dateien (4), die in einem persönlichen Multimedia-Endgerät (10, T) gespeichert sind, das den Zugriff auf wenigstens einen Inhalt entsprechend einer dieser Dateien (4) von einem Netzwerk (N) des Internet-Typs zulässt, das Folgendes benutzt:
ein Multimedia-Endgerät (10, T), verbunden mit einem Anschlussgerät (2) und einer Einrichtung (E) mittels eines Funktelefonnetzwerks;
wobei das Anschlussgerät (2) ein Massenspeichermittel mit nichtflüchtigem Memory (20), ein Modem (23) zum Zulassen des Zugriffs auf das genannte Netzwerk und zwei separate Module umfasst:
• ein erstes Modul (21), konfiguriert zum Verwalten der von dem persönlichen Multimedia-Endgerät (10, T) gesendeten Dateien (4), und
• ein zweites Modul (22), konfiguriert zum Realisieren der Freigabe der Dateien (4) zur gemeinsamen Nutzung mit dem Netzwerk (N) und umfassend einen Serverteil (S), konfiguriert zum Zulassen, von dem genannten Netzwerk (N), des Zugriffs auf wenigstens einen Inhalt entsprechend einer Datei (4), die sich auf dem Massenspeichermittel mit nichtflüchtigem Memory befindet,
wobei das Verfahren Folgendes beinhaltet:
- einen Schritt des Verbindens des Multimedia-Endgeräts (10, T) mit einer Einrichtung (E) eines Funktelefonnetzwerks;
- einen Schritt des Empfangens (502), durch die Einrichtung (E), von wenigstens einer gemeinsam zu nutzenden Datei (4), wobei die genannte wenigstens eine Datei von dem Multimedia-Endgerät (10, T) gesendet wurde;
- einen Schritt des Speicherns, in Zwischenspeichermitteln (M1) der Einrichtung (E), der genannten wenigstens einen gesendeten Datei;
- einen Schritt des Suchens nach Korrespondenz in der Identifikationsdatenbank, geliefert von dem genannten Endgerät (10, T) des mit dem Endgerät (10, T) assoziierten Anschlussgeräts (2) durch die Einrichtung (E);
- einen Schritt (503) des Sendens von wenigstens einer gemeinsam zu nutzenden Datei (4) zu dem Anschlussgerät (2) durch die Einrichtung (E);
- einen Schritt (53, 54) des Empfangens und Interpretierens von Anweisungen, durch das erste Modul (21) des Anschlussgeräts (2), eines von dem Endgerät (10, T) ausgegebenen Befehls, zum gemeinsamen Nutzen der wenigstens einen gemeinsam zu nutzenden Datei, wobei der Gemeinschaftsnutzungsbefehl durch ein Modem (23) empfangen wird und das genannte Endgerät ein Mobiltelefon (T) ist;
- einen Schritt (55) des Speicherns, in dem Anschlussgerät (2), eines Inhalts entsprechend der oder den Dateien des Gemeinschaftsnutzungsbefehls, durch Verwenden des Massenspeichermittels (20) mit nichtflüchtigem Memory des Anschlussgeräts (2) unter der Kontrolle des zweiten Moduls (22); und
- einen Schritt (56) des gemeinsamen Nutzens von gespeicherten Inhalten mit dem genannten Netzwerk (N) mit Hilfe des Serverteils (S), der sich in dem zweiten Modul (22) des Anschlussgeräts (2) befindet.

2. Verfahren nach Anspruch 1, bei dem der Gemeinschaftsnutzungsbefehl in einem Schritt (52) des Sendens, durch das Endgerät, eines in dem Massenspeichermittel (20) zu speichernden Inhalts und von mit diesem Inhalt assoziierten Gemeinschaftsnutzungsinformationen übertragen wird.

3. Verfahren nach Anspruch 1 oder 2, bei dem der Gemeinschaftsnutzungsbefehl nach einem Vorabauswahlschritt, über eine mit einem Modul (12) zum Verarbeiten von im Endgerät (10, T) gespeicherten Dateien assoziierte Schnittstelle des Endgeräts (10, T), von wenigstens einer Datei, die der Benutzer gemeinsam nutzen möchte, zum Anschlussgerät (2) gesendet wird.

4. Verfahren nach Anspruch 3, bei dem ein Schritt des Verwaltens von gemeinsam genutzten Inhalten mit Hilfe des genannten Dateiverarbeitungsmoduls (12) realisiert wird und bei dem eine Liste (L) von Dateien entsprechend den zur gemeinsamen Nutzung freigegebenen Inhalten erzeugt und in einem Memory (14) des Multimedia-Endgeräts (10, T) gespeichert wird.

5. Verfahren nach einem der Ansprüche 1 bis 4, bei dem der Interpretationsschritt (54) das Lesen, durch Analysemittel (212) des ersten Moduls (21), von Konfigurationsdaten relativ zu dem während des Empfangsschritts (53) empfangenen Inhalt beinhaltet, um festzustellen, ob der empfangene Inhalt frei zugänglich ist, und wenn dies der Fall ist, ein Befehl zum Speichern des Inhalts zum zweiten Modul (22) gesendet wird, um den Speicherschritt (55) auszulösen.

6. Verfahren nach einem der Ansprüche 1 bis 5, bei dem Befehle, die vom Endgerät (10, T) ausgegeben wurden und Anweisungen zum Modifizieren oder Unterdrücken von wenigstens einem in den Massenspeichermitteln (20) gespeicherten Inhalt enthalten, von Relaismitteln (211) des ersten Moduls (21) empfangen und zum zweiten Modul (22) weitergeleitet werden, um das Auslösen einer Modifikation oder einer Unterdrückung des in den aus den Befehlen extrahierten Anweisungen identifizierten Inhalts zuzulassen.

7. Verfahren nach einem der Ansprüche 1 bis 6, das das Aufbauen einer permanenten Verbindung des Anschlussgeräts (2) mit dem Netzwerk (N) beinhaltet, wobei diese permanente Verbindung während eines Schritts des Übertragens von von dem Apparat (2) empfangenen Anrufen zu einer Telefonieeinrichtung (16) benutzt wird, wobei die Übertragung über eine Kommunikationsschnittstelle (203) des Apparats getrennt von der mit dem ersten Modul (21) assoziierten Kommunikationsschnittstelle (201) realisiert wird, die das Empfangen der in den Massenspeichermitteln (20) zu speichernden Inhalte zulässt.

8. Verfahren nach einem der Ansprüche 1 bis 7, das einen Schritt des Verwaltens, durch einen zentralisierten Server eines Internet-Zugangsanbieters, von wenigstens einer Anforderung von Zugang zu einem in den Massenspeichermitteln (20) des Anschlussgeräts (2) gespeicherten Inhalt beinhaltet, in dem eine Korrespondenz zwischen dem angeforderten Inhalt und dem zu adressierenden Anschlussgerät (2) durch den genannten zentralisierten Server zum Erzeugen eines Schritts (61) des Sendens einer Anforderung zum Konsultieren des genannten Inhalts zum zweiten Modul (22) des Verbindungsgeräts (2) realisiert wird.

9. Verfahren nach Anspruch 8, bei dem die Korrespondenz zwischen dem angeforderten Inhalt und dem zu adressierenden Anschlussgerät (2) durch den genannten zentralisierten Server anhand einer mit dem Serverteil (S) des zweiten Moduls (22) des Anschlussgeräts (2) assoziierten URL-Adresse realisiert wird.

10. Verfahren nach einem der Ansprüche 1 bis 9, das Folgendes beinhaltet:
- einen Schritt (61) des Empfangens, durch das zweite Modul (22) des Anschlussgeräts (2), einer Anforderung zum Konsultieren eines vom Netzwerk (N) ausgegebenen Inhalts;
- einen Schritt (62) des Analysierens der Anforderung durch den Serverteil (S) des zweiten Moduls (22);
- einen Schritt (63) des Erstellens einer Antwort, in der ein Datenbankverwalter (221) des zweiten Moduls (22) zum Auswählen des Inhalts in Abhängigkeit von aus der Konsultationsanforderung extrahierten Informationselementen relativ zum angeforderten Inhalt benutzt wird; und
- einen Schritt (64) des Sendens, durch den Serverteil (S) des zweiten Moduls (22), einer den gewählten Inhalt enthaltenden Antwort zu dem Netzwerk (N), die an das ferne Endgerät (6) am Ursprung der Konsultationsanforderung adressiert ist.

11. Verfahren nach einem der Ansprüche 1 bis 10, bei dem der Gemeinschaftsnutzungsbefehl über eine drahtlose Kurz-oder Langstreckendirektverbindung zwischen einem das Multimedia-Endgerät bildenden Mobiltelefon (T) und dem Anschlussgerät (2) übertragen wird.

12. Verfahren nach einem der Ansprüche 1 bis 11, bei dem der Schritt (56) der Freigabe zur gemeinsamen Nutzung auf dem Netzwerk (N) für Inhalte realisiert wird, die über Multimedia-Funktionen eines Blogs des Benutzers des Multimedia-Endgeräts (10) zugänglich sind, wobei eine Wartung des Blogs mittels des zweiten Moduls (22) realisiert wird.

13. Verfahren nach Anspruch 6, das einen Schritt des Aktualisierens, durch einen Datenbankmanager (221) des zweiten Moduls (22), von wenigstens einem der zur gemeinsamen Nutzung freigegebenen Inhalte mit dem Netzwerk (N) beinhaltet, wobei der Aktualisierungsschritt nach einem Erkennungsschritt, durch die Mittel zum Erkennen eines Moduls (12) zum Verarbeiten von in dem Endgerät (10, T) gespeicherten Dateien, einer Modifikation ausgelöst wird, die vom Nutzer an wenigstens einer der im Endgerät (10, T) gespeicherten Dateien bewirkt wird, und deren Inhalt zur gemeinsamen Nutzung freigegeben wird, wobei die Befehle die Anweisungen zum Modifizieren oder Unterdrücken von dem genannten Verarbeitungsmodul (12) gesendet werden.

14. Verfahren nach Anspruch 6 oder 13, das in dem Multimedia-Endgerät (10, T) einen asynchronen Schritt zum Erkennen einer Modifikation oder Unterdrückung einer an dem Endgerät (10, T) realisierten Datei beinhaltet, um eine Auslösung einer Modifikation oder einer Unterdrückung des entsprechenden Inhalts zuzulassen, freigegeben zur gemeinsamen Nutzung über die Massenspeichermittel (20) des Anschlussgeräts (2).

15. Verfahren nach Anspruch 6 oder 13, das im Multimedia-Endgerät (10, T) einen Schritt des synchronen Erkennens einer Modifikation oder Unterdrückung einer am Endgerät (10, T) realisierten Datei beinhaltet, um eine Auslösung einer Modifikation oder einer Unterdrückung des entsprechenden Inhalts zuzulassen, freigegeben zur gemeinsamen Nutzung über die Massenspeichermittel (20) des Anschlussgeräts (2).

16. Verfahren nach Anspruch 1, bei dem der Schritt (54) des Interpretierens von Anweisungen, durch das erste Modul (21), des Gemeinschaftsnutzungsbefehls nach einem Schritt (504) des Übertragens des genannten Befehls und des assoziierten Inhalts von dem zweiten Modul (22) zum ersten Modul (21) erfolgt.

17. Verfahren nach Anspruch 1 oder 16, das einen Schritt des Aufbauens einer Korrespondenz beinhaltet, realisiert durch Routing-Mittel (40) der Einrichtung (E) des Funktelefonnetzwerks, um aus einer Korrespondenztabelle (M2) die Adresse des Modems (23) des Anschlussgeräts (2) anhand der von dem Mobiltelefon (T) gelieferten Identifikationsdaten zu extrahieren.

18. Verfahren nach einem der Ansprüche 1 bis 17, das einen Schritt des Aktualisierens des ersten Moduls (21) und/oder des zweiten Moduls (22) beinhaltet, ausgelöst nach einem Schritt des Empfangens, durch das zweite Modul (22), einer Aktualisierungsanforderung von einer Einrichtung des Netzwerks (N), wobei die Anforderung Aktualisierungsaktivierungscodes enthält.

19. Verfahren nach einem der Ansprüche 1 bis 18, das einen Schritt des Sendens einer Quittierung beinhaltet, realisiert durch das erste Modul (21), wenn der Schritt (56) des Freigebens zur gemeinsamen Nutzung mit Erfolg durchgeführt wurde, wobei diese Quittierung von einem Verarbeitungsmodul (12) des Endgeräts (10, T) erwartet wird, das den Gemeinschaftsnutzungsbefehl erzeugt hat.

20. Gerät (2) für den Anschluss an ein Netzwerk (N) des Internet-Typs, das Folgendes umfasst:
• eine erste Kommunikationsschnittstelle (201) mit einem persönlichen Multimedia-Endgerät (10, T), konfiguriert zum Zulassen des Aufbauens einer drahtlosen Kurz- oder Mittelstrecken-Direktverbindung mit dem genannten Endgerät;
• eine zweite Kommunikationsschnittstelle (202) mit dem Netzwerk (N),
• Massenspeichermittel (20) mit nichtflüchtigem Memory,
• ein Modem (23), das zwischen der ersten Schnittstelle (201) und der zweiten Schnittstelle (202) geschaltet ist, zum Zulassen des Anschließens des genannten Endgeräts (10, T) an das Netzwerk (N), wobei das Anschlussgerät (2) zwei separate Module umfasst:
- ein erstes Modul (21) zum Verwalten der von einem persönlichen Multimedia-Endgerät (10, T) gesendeten und über die erste Schnittstelle (201) empfangenen Dateien, wobei das erste Modul (21) auch zum Verwalten der von einem persönlichen Multimedia-Endgerät (10, T) gesendeten und über die zweite Schnittstelle (202) empfangenen Dateien ausgelegt ist;
- ein zweites Modul (22) in Verbindung mit den Massenspeichermitteln (20) zum Auslösen einer Speicherung einer Datei (4) als Reaktion auf einen vom ersten Modul (21) gelieferten Befehl, wobei das zweite Modul (22) Folgendes umfasst:
- i) einen Serverteil (S), konfiguriert zum Zulassen, von dem genannten Netzwerk (N), des Zugriffs auf wenigstens einen Inhalt entsprechend einer Datei (4), die sich auf den Massenspeichermitteln mit nichtflüchtigem Memory (20) befindet; und
- ii) einen Datenbankmanager (221), der mit den Massenspeichermitteln (20) assoziierte Auswahlmittel (220) beinhaltet und es zulässt, jede der in den Massenspeichermitteln (20) gespeicherten Dateien (4) aufzunehmen und auszuwählen, wobei der Datenbankmanager (221) Parametrisierungsmittel (P) zum Parametrisieren einer Freigabe der aufgenommenen Dateien (4) zur gemeinsamen Nutzung mit dem Netzwerk (N) umfasst,
wobei das Anschlussgerät (2) ausgelegt ist zum:
• Empfangen und Interpretieren (53, 54) von Anweisungen, durch das erste Modul (21) des Anschlussgeräts (2), eines von einem Mobiltelefon (10, T) ausgegebenen Befehls zum gemeinsamen Nutzen der wenigstens einen gemeinsam zu nutzenden Datei; wobei der Gemeinschaftsnutzungsbefehl mittels des Modems (23) empfangen wird und von dem mit einem Funktelefonnetzwerk verbundenen Mobiltelefon (T) kommt,
• Empfangen wenigstens einer Gemeinschaftsdatei mittels des genannten Modems (23) von einer Einrichtung (E) des genannten Funktetefonnetzwerks,
• Speichern (55), in dem Anschlussgerät (2), eines Inhalts entsprechend der wenigstens einen Datei des Gemeinschaftsnutzungsbefehls, durch Nutzen der genannten Massenspeichermittel (20) mit nichtflüchtigem Memory des Anschlussgeräts (2) unter der Kontrolle des zweiten Modems (22); und
• Freigeben der gespeicherten Inhalte zur gemeinsamen Nutzung (56) mit dem genannten Netzwerk (N), durch Nutzen des im zweiten Modul (22) des Anschlussgeräts (2) vorhandenen Serverteils (S).

21. Gerät nach Anspruch 20, in dem das erste Modul (21) Mittel (212) zum Analysieren von Informationen umfasst, die die Autorisierung des Zugreifens auf die über die erste Schnittstelle (201) empfangenen Dateien repräsentieren, zum Feststellen, ob wenigstens eine der empfangenen Dateien (4) frei zugänglich ist, und, wenn dies der Fall ist, Erzeugen eines Befehls zum Speichern der frei zugänglichen Datei (4) an das zweite Modul (22).

22. Gerät nach Anspruch 20 oder 21, bei dem das erste Modul (21) mit der ersten und zweiten Kommunikationsschnittstelle (201, 202) assoziierte Relaismittel (211) zum Weiterleiten der von dem Endgerät (10, T) ausgegebenen Befehle zum Modifizieren oder Unterdrücken von wenigstens einer gespeicherten Datei zum zweiten Modul (22) umfasst, wobei der Datenbankmanager (221) im zweiten Modul (22) Auswahlmittel (220) beinhaltet, um eine Modifikation oder Unterdrückung einer gespeicherten Datei (4) als Reaktion auf einen Modifikations- oder Unterdrückungsbefehl zuzulassen.

23. Gerät nach einem der Ansprüche 20 bis 22, in dem das zweite Modul (22) einen Datenbankmanager (221) umfasst, der die genannten Auswahlmittel (220) enthält, um einen Gemeinschaftsnutzungszugriff auf in den Massenspeichermitteln (20) gespeicherte Befehle an mit dem Netzwerk (N) verbundenen fernen Endgeräten (6) zuzulassen, wobei der Datenbankmanager (221) zum Sammeln von Informationselementen über jede Datei (4) und zum Aktualisieren dieser Informationselemente und/oder der assoziierten Dateien in Abhängigkeit von vom Endgerät (10, T) ausgegebenen Aktualisierungsbefehlen konfiguriert ist.

24. Gerät nach Anspruch 20, bei dem das zweite Modul (22) Mittel zum Übertragen eines über die zweite Schnittstelle (202) empfangenen Gemeinschaftsbenutzungsbefehls zum ersten Modul (21) umfasst.

25. Gerät nach einem der Ansprüche 20 bis 24, das eine dritte Kommunikationsschnittstelle (203) umfasst, die das Übertragen der von dem Gerät (2) empfangenen Anrufe zu einer Telefoneinrichtung (16) zulässt.

26. Gerät nach einem der Ansprüche 20 bis 25, bei dem das zweite Modul (22) mit dem Modem (23) zum Empfangen einer Anforderung zum Konsultieren eines von dem Netzwerk (N) ausgegebenen Inhalts und zum Analysieren dieser Konsultationsanforderung durch Benutzen des Serverteils (S) verbunden ist, wobei der Datenbankmanager (221) des zweiten Moduls (22) aus der Konsultationsanforderung extrahierte Informationsbefehle über den angeforderten Inhalt zum Auswählen des angeforderten Inhalts empfängt.

27. Gerät nach Anspruch 26, in dem der Serverteil (S) des zweiten Moduls (22) zum Senden, zu dem Netzwerk (N), einer Anforderung auf die Inhaltskonsultationsanforderung ausgelegt ist, durch Einschließen des gewählten Inhalts und der Daten zum Adressieren des fernen Endgeräts (6) am Ursprung der Konsultationsanforderung.

28. Gerät nach einem der Ansprüche 20 bis 27, bei dem die erste Kommunikationsschnittstelle (201) ein drahtloses Kurz- oder Mittelstrecken-Direktanschlusselement zum Kommunizieren mit einem Mobiltelefon (T) umfasst, das mit einem analogen Anschlusselement ausgestattet ist.

29. Gerät nach einem der Ansprüche 20 bis 28, in dem das zweite Modul (22) Mittel zum Führen eines Blogs des Benutzers des Multimedia-Endgeräts (10) umfasst.

30. Gerät nach einem der Ansprüche 20 bis 29, das einen TV-Fluss-Decoder und ein digitales Videoaufnahmegerät umfasst, das das Speichern der über den Decoder empfangenen TV-Programme in den Massenspeichermitteln (20) zulässt.

31. System zum gemeinsamen Nutzen von in einem persönlichen Multimedia-Endgerät (10, T) gespeicherten Dateien, das einen Zugriff auf wenigstens einen Inhalt entsprechend einer dieser Dateien (4) von einem Netzwerk (N) des Internet-Typs zulässt, **dadurch gekennzeichnet, dass** es Folgendes umfasst:
- einen zentralisierten Server, der mit einem Netzwerk (N) des Internet-Typs verbunden ist;
- ein Anschlussgerät (2) nach einem der Ansprüche 20 bis 30;
- ein persönliches Multimedia-Endgerät (10, T), ausgestattet mit einem Modul (12) zum Verarbeiten von im Endgerät (10, T) gespeicherten Dateien, wobei das Verarbeitungsmodul (12) die Verwaltung einer Freigabe von im Endgerät (10, T) gespeicherten Dateien zur gemeinsamen Nutzung und von mit dem Verarbeitungsmodul (12) des Endgeräts (10, T) assoziierten Mitteln zulässt, um Befehle zum gemeinsamen Nutzen von Dateien über eine Kommunikationsschnittstelle des Endgeräts (10, T) zu dem Anschlussgerät (2) zu senden;
- eine Einrichtung (E) eines Funktelefonnetzwerks, das die Übertragung von wenigstens einem Inhalt vor dem Senden zu dem Anschlussgerät (2) zulässt und Folgendes umfasst:
∘ ein Mittel zum Anschließen an das Multimedia-Endgerät (10, T);
∘ ein Mittel zum Empfangen von wenigstens einer gemeinsamen zu nutzenden Datei, wobei die genannte wenigstens eine Datei von dem genannten Multimedia-Endgerät (10, T) gesendet wurde;
∘ Zwischenspeichermittel (M1);
∘ Routing-Mittel (40) zum Extrahieren der Adresse des Modems (23) des Anschlussgeräts (2) aus einer Korrespondenztabelle (M2) auf der Basis der von dem Endgerät (10, T) gelieferten Identifikationsdaten;
∘ ein Mittel zum Senden von gemeinsam zu nutzenden Dateien zu dem Anschlussgerät (2).

## Claims

1. Method for sharing files (4) stored in a personal multimedia terminal (10, T), allowing access to at least one content corresponding to one of these files (4) from an internet-type network (N), using:
a multimedia terminal (10, T) being connected to a connection apparatus (2) and to an item of equipment (E) by means of a mobile telephone network;
the connection apparatus (2) comprising a mass storage means with non-volatile memory (20), a modem (23) to allow access to said network, and two separate modules:
- a first module (21) configured to manage the files (4) transmitted from the personal multimedia terminal (10, T), and
- a second module (22) configured to carry out sharing of the files (4) with said network (N) and comprising a server part (S) configured to allow access from said network (N) to at least one content corresponding to a file (4) situated in the mass storage means with non-volatile memory,
the method comprising:
- a step of connection of the multimedia terminal (10, T) to an item of equipment (E) of a mobile telephone network;
- a step of reception (502) by the item of equipment (E) of the at least one file (4) to be shared, said at least one file sent by the multimedia terminal (10, T);
- a step of storage in temporary storage means (M1) of the item of equipment (E) of said at least one file sent;
- a step of searching correspondence on the identification database provided by said terminal (10, T) of the connection apparatus (2) associated with said terminal (10, T) by the item of equipment (E);
- a step of sending (503) of the at least one file (4) to be shared to the connection apparatus (2) by the item of equipment (E);
- a step (53, 54) of reception and interpretation of instructions, by the first module (21) of the connection apparatus (2), of a command from the terminal (10, T) to share said at least one file to be shared, the share command being received by means of the modem (23) and said terminal being a mobile telephone (T);
- a step (55) of storage in the connection apparatus (2) of a content corresponding to the file(s) of the share command, by use of mass storage means (20) with non-volatile memory of the connection apparatus (2) under the control of the second module (22); and
- a step (56) of sharing of the stored contents with said network (N), by use of the server part (S) present in the second module (22) of the connection apparatus (2).

2. Method according to claim 1, in which the share command is transmitted during a step (52) of the terminal sending a content to be stored in the mass storage means (20) and share information associated with this content.

3. Method according to claim 1 or 2, in which the share command is transmitted to the connection apparatus (2) after a prior step of selection, via an interface of the terminal (10, T) associated with a module (12) for processing files stored in the terminal (10, T), of at least one file which the user wishes to share.

4. Method according to claim 3, in which a step of administration of the shared contents is performed by use of said module (12) for processing files, and in which a list (L) of files corresponding to the shared contents is generated and stored in a memory (14) of the multimedia terminal (10, T).

5. Method according to one of claims 1 to 4, in which the step (54) of interpretation comprises a reading by means (212) for analysis of the first module (21) of configuration data relating to the content received during the reception step (53) in order to determine whether the content received can be freely accessed, and if so, a content storage command is transmitted to the second module (22) to allow the storage step (55) to be actuated.

6. Method according to one of claims 1 to 5, in which commands, from the terminal (10, T) and including instructions for modification or deletion of at least one content stored in the mass storage means (20), are received by relay means (211) of the first module (21) and relayed to the second module (22) in order to allow activation of a modification or deletion of the content identified in the instructions extracted from the commands.

7. Method according to one of claims 1 to 6, comprising the establishment of a permanent connection of the connection apparatus (2) to the network (N), this permanent connection being used during a step of transfer of calls received by the apparatus (2) to an item of telephone equipment (16), the transfer being carried out via a communication interface (203) of the apparatus separate from the communication interface (201) associated with the first module (21) which makes it possible to receive contents to be stored in the mass storage means (20).

8. Method according to one of claims 1 to 7, comprising a step of management by a centralised server of an internet service provider of at least one request for access to a content stored in the mass storage means (20) of the connection apparatus (2), in which a correspondence between the requested content and the connection apparatus (2) to be addressed is carried out by said centralised server in order to generate a step (61) of sending, to the second module (22) of the connection apparatus (2), a request for consultation of said content.

9. Method according to claim 8, in which the correspondence between the requested content and the connection apparatus (2) to be addressed is carried out by said centralised server by use of a URL address associated with the server part (S) of the second module (22) of the connection apparatus (2).

10. Method according to one of claims 1 to 9, comprising:
- a step (61) of reception, by the second module (22) of the connection apparatus (2), of a request for consultation of a content from the network (N);
- a step (62) of analysis of the request by the server part (S) of the second module (22);
- a step (63) of constitution of a response, in which a database manager (221) of the second module (22) is used to select the content, according to items of information relating to the requested content, extracted from the consultation request; and
- a step (64) of sending, by the server part (S) of the second module (22), of a response including the selected content to the network (N) and addressed to the remote terminal (6) at the source of the consultation request.

11. Method according to one of claims 1 to 10, in which the share command is transmitted via a direct wireless connection over a short or medium distance between a mobile telephone (T) forming the multimedia terminal and the connection apparatus (2).

12. Method according to one of claims 1 to 11, in which said step (56) of sharing on the network (N) is performed for contents accessible via multimedia functions of a blog of the user of the multimedia terminal (10), maintenance of the blog being carried out by means of the second module (22).

13. Method according to claim 6, comprising a step of updating, by a database manager (221) of the second module (22), of at least one of the contents shared with the network (N), the updating step being activated after a step of detection, by detection means of a module (12) for processing the files stored in the terminal (10, T), of a modification made by the user on at least one of the files stored in the terminal (10, T) and of which the content is shared, the commands including the instructions for modification or deletion being transmitted from said processing module (12).

14. Method according to claim 6 or 13, comprising in the multimedia terminal (10, T) a step of asynchronous detection of a modification or deletion of a file performed at the level of the terminal (10, T) in order to allow activation of a modification or deletion of the corresponding content, shared via the mass storage means (20) of the connection apparatus (2).

15. Method according to claim 6 or 13, comprising in the multimedia terminal (10, T) a step of synchronous detection of a modification or deletion of a file performed at the level of the terminal (10, T) in order to allow activation of a modification or deletion of the corresponding content, shared via the mass storage means (20) of the connection apparatus (2).

16. Method according to claim 1, in which the step (54) of interpretation of instructions, by the first module (21), of the share command is performed after a step (504) of transfer of said command and of the associated content from the second module (22) to the first module (21).

17. Method according to claim 1 or 16, comprising a step of establishment of a correspondence, performed by routing means (40) of the item of equipment (E) of the mobile telephone network, in order to extract from a correspondence table (M2) the address of the modem (23) of the connection apparatus (2), on the basis of identification data provided by the mobile telephone (T).

18. Method according to one of claims 1 to 17, comprising a step of updating the first module (21) and/or the second module (22), activated after a step of reception by the second module (22) of an update request issued from an item of equipment of the network (N), the request containing update activation codes.

19. Method according to one of claims 1 to 18, comprising a step of sending an acknowledgement performed by the first module (21) if the sharing step (56) was performed successfully, this acknowledgement being expected by a processing module (12) of the terminal (10, T) having generated the share command.

20. Apparatus (2) for connection to a network (N) of the internet type, comprising
- a first interface (201) for communication with a personal multimedia terminal (10, T) configured to make it possible to establish a direct wireless connection over a short or medium distance with said terminal,
- a second interface (202) for communication with the network (N),
- mass storage means (20) with non-volatile memory,
- a modem (23) interposed between the first interface (201) and the second interface (202) to make it possible to connect said terminal (10, T) to the network (N),
the connection apparatus (2) comprising two separate modules:
- a first module (21) for managing files transmitted from a personal multimedia terminal (10, T) and received via the first interface (201), the first module (21) also being arranged so as to manage files transmitted from a personal multimedia terminal (10, T) and received via the second interface (202);
- a second module (22) in conjunction with the mass storage means (20) for activating storage of a file (4), in response to a command delivered by the first module (21), the second module (22 comprising:
- i) a server part (S) configured to allow access from said network (N) to at least one content corresponding to a file (4) situated on the mass storage means with non-volatile memory (20); and
- ii) a database manager (221) including selection means (220) associated with the mass storage means (20), making it possible to index and select each of the files (4) stored in the mass storage means (20), the database manager (221) comprising parameterisation means (P) for parameterising sharing of the indexed files (4) with the network (N),
the connection apparatus (2) being adapted to:
- receive and interpret (53, 54) instructions, by the first module (21) of the connection apparatus (2), of a command from a mobile telephone (10, T) to share said at least one file to be shared; the share command being received by means of the modem (23) and coming from said mobile telephone (T) connected to a mobile telephone network,
- receive at least one file to be shared by means of said modem (23) from an item of equipment (E) of said mobile telephone network,
- store (55) in the connection apparatus (2) a content corresponding to said at least one share command file, by use of said mass storage means (20) with non-volatile memory of the connection apparatus (2) under the control of the second module (22); and
- share (56) the stored contents with said network (N), by use of the server part (S) present in the second module (22) of the connection apparatus (2).

21. Apparatus according to claim 20, in which the first module (21) comprises means (212) for analysis of information representing authorisation to access files received via the first interface (201) in order to determine whether at least one of the files received (4) can be freely accessed and, if so, generate a command for storage of the freely accessible file (4) intended for the second module (22).

22. Apparatus according to claim 20 or 21, in which the first module (21) comprises relay means (221) associated with the first and second communication interfaces (201, 202) for relaying commands from the terminal (10, T) to modify or delete at least one stored file, to the second module (22), the database manager (221) in the second module (22) includes the selection means (220) to make it possible to modify or delete a stored file (4) in response to a modification or deletion command.

23. Apparatus according to one of claims 20 to 22, in which the second module (22) comprises a database manager (221) including said selection means (220) to allow sharing access to the files stored in the mass storage means (20) at remote terminals (6) connected to the network (N), the database manager (221) being configured to accumulate items of information relating to each file (4) and to update these items of information and/or the associated files according to update commands from the terminal (10, T).

24. Apparatus according to claim 20, in which the second module (22) comprises means for transfer of a share command received via the second interface (202) to the first module (21).

25. Apparatus according to one of claims 20 to 24, comprising a third communication interface (203) making it possible to transfer calls received by the apparatus (2) to an item of telephone equipment (16).

26. Apparatus according to one of claims 20 to 25, in which the second module (22) is connected to the modem (23) in order to receive a request for consultation of a content from the network (N) and analyses this consultation request by use of the server part (S), the database manager (221) of the second module (22) receiving items of information relating to the requested content, extracted from the consultation request, in order to select the requested content.

27. Apparatus according to claim 26, in which the server part (S) of the second module (22) is arranged so as to send to the network (N) a response to the request for consultation of content, including the selected content and address data for the remote terminal (6) at the source of the consultation request.

28. Apparatus according to one of claims 20 to 27, in which the first communication interface (201) comprises an element for direct wireless connection over a short or medium distance for communicating with a mobile telephone (T) provided with a similar connection element.

29. Apparatus according to one of claims 20 to 28, in which the second module (22) comprises means for maintenance of a blog of the user of the multimedia terminal (10).

30. Apparatus according to one of claims 20 to 29, comprising a TV stream decoder and a digital video recorder making it possible to store TV programmes received via the decoder in the mass storage means (20).

31. System for sharing files stored in a personal multimedia terminal (10, T), allowing access to at least one content corresponding to one of these files (4) from a network (N) of the internet type, **characterised in that** it comprises:
- a centralised server connected to a network (N) of the internet type;
- a connection apparatus (2) according to one of claims 20 to 30;
- a personal multimedia terminal (10, T) provided with a module (12) for processing files stored in the terminal (10, T), the processing module (12) making it possible to manage sharing of files stored in the terminal (10, T) and means associated with the processing module (12) of the terminal (10, T) for sending file share commands, via a communication interface of the terminal (10, T), to the connection apparatus (2);
- an item of equipment (E) of a mobile telephone network allowing the transit of at least one content before being sent to the connection apparatus (2) and comprising:
∘ a means for connection to the multimedia terminal (10, T);
∘ a means for reception of at least one file to be shared, said at least one file being sent by said multimedia terminal (10, T);
∘ temporary storage means (M1);
∘ routing means (40) for extracting from a correspondence table (M2) the address of the modem (23) of the connection apparatus (2), on the basis of identification data provided by the terminal (10, T);
∘ a means for sending the files to be shared to the connection apparatus (2).
